# EUROPEAN PATENT APPLICATION

(11) **EP 1 983 005 A1**
(43) Date of publication of application: **22.10.2008**
(21) Application number: 07713650.5
(22) Date of filing: 19.01.2007
(51) Int. Cl.: C08B 15/00, C08G 63/82

(54) **METHOD FOR PRODUCING CYCLIC ESTER-MODIFIED GLUCAN DERIVATIVE**

(30) Priority: 27.01.2006 JP 2006019642
(71) Applicant: DAICEL CHEMICAL INDUSTRIES, LTD., Osaka-shi, Osaka 530-0001 (JP)
(72) Inventor: UMEMOTO, Koichi, Himeji-shi, Hyogo 671-1283 (JP); KATAYAMA, Hiroshi, Himeji-shi, Hyogo 671-1283 (JP)
(74) Representative: Uchida, Kenji
(86) International application number: PCT/JP2007/050763
(87) International publication number: WO 2007/086317

(57) **Abstract**

A process for producing a glucan derivative modified with a cyclic ester with a highly suppressed homopolymerization of a cyclic ester is provided.

In a production process for a modified glucan derivative, by allowing a glucan derivative having a hydroxyl group to react with a cyclic ester in a solvent in the presence of a ring-opening polymerization catalyst to give a modified glucan derivative in which the cyclic ester is graft-polymerized to the glucan derivative, (1) the ring-opening polymerization catalyst is a metal complex which by itself does not initiate the polymerization of the cyclic ester; (2) the solvent comprises an aromatic hydrocarbon solvent having a solubility in water of not more than 10% by weight at 20°C; and (3) the proportion of the solvent is not less than 60 parts by weight relative to 100 parts by weight of the glucan derivative having a hydroxyl group.

## Description

### TECHNICAL FIELD

The present invention relates to an efficient process for producing a glucan derivative modified with a cyclic ester (or a cyclic ester-modified glucan derivative) which can be used as a thermoplastic resin (e.g., a cellulose acylate derivative), a glucan derivative modified with a cyclic ester obtained by the process, and a molded product comprising the glucan derivative modified with a cyclic ester.

### BACKGROUND ART

Glucans (such as a cellulose, a starch (or an amylose), or a dextran), which contain a glucose unit, have no thermoplasticity and cannot be directly used as a plastic (a thermoplasticresin). Therefore, such glucans (in particular, a cellulose) are acylated (e.g., acetylated) to impart thermoplasticity thereto and used as a thermoplastic resin.

Among these glucans, in particular, a cellulose is acylated to give a cellulose acylate (particularly, a cellulose acetate), which is used for various applications. For example, a cellulose acetate having an average degree of substitution of about 2.4 to 2.5 (a cellulose diacetate) is mixed with a plasticizer to improve the thermoplasticity and subjected to thermoforming.

A modification of such a cellulose acylate for improving solubility, thermomeltability, melting processability, or the like, is also reported. For example, Japanese Patent Application Laid-Open No. 86621/1984 (JP-59-86621A, Patent Document 1) discloses a process for producing a graft polymer in which a cyclic ester is grafted to a cellulose derivative. The process comprises a ring-opening polymerization of the cyclic ester in the presence of the cellulose derivative, with adding a ring-opening polymerization catalyst for the cyclic ester. The cellulose derivative includes, e.g., cellulose acetate, cellulose acetate butylate, cellulose acetate propionate, ethyl cellulose, cyanoethyl cellulose, benzyl cellulose, and hydroxypropyl cellulose, and the cyclic ester includes, e.g., ε-caprolactone. The document teaches that in the ring-opening polymerization, an alkali metal (e.g., sodium and potassium) and a derivative thereof, a tertiary amine (such as pyridine), an alkylaluminum (e.g., triethylaluminum) and a derivative thereof, a titanium alkoxide compound (such as tetrabutyl titanate), an organometallic compound (such as tin octylate or dibutyltin laurate), or a metal halide (such as tin chloride) may be used as the catalyst. Specifically, it is described that, for example, in Example 1, 100 parts of a cellulose acetate, 244.4 parts of ε-caprolactone, and 55 parts of xylene were heated to 90°C to dissolve the cellulose acetate, and with continuous stirring, to the dissolved cellulose acetate was added 30 parts of a mixture of xylene containing 0.0024 part of tetrabutyl titanate and the obtained mixture was heated at 150°C for 20 hours to conduct a reaction to give a clear light yellow graft polymer.

Moreover, Japanese Patent Application Laid-Open No. 188401/1985 (JP-60-188401A, Patent Document 2) discloses a thermoplastic molding material comprising an ester of a fatty acid and a cellulose which is obtainable by adding (grafting) a cyclic ester (e.g., ε-caprolactone) to an ester of a fatty acid and a cellulose having a free hydroxyl group (e.g., a cellulose acetate) in a proportion of 0.5 to 4.0 mol per an anhydrous glucose unit of the ester. In this document, the addition of the cyclic ester to the ester of a fatty acid and a cellulose is conducted by heating the both components in the presence of a ring-opening polymerization catalyst in an appropriate solvent or without the solvent. The appropriate catalyst includes, as in the previous document, an organometallic compound (e.g., tetrabutyl titanate and dibutyltin laurate), a metal halide (such as tin chloride), an alkali metal, a tertiary amine, or the like. This document also describes that owing to the internal plasticization, the resulting product can be molded by an injection molding, an extrusion molding, or the like, without adding a large amount of a plasticizer thereto. The obtained molded product can be used for a molded product such as a sheet or a film. Concretely, for example, in Example 1, 100 g of a cellulose acetate, 64.4 g of ε-caprolactone, and 73.1 g of xylene were heated to 140°C to dissolve the cellulose acetate homogenously. With continuous stirring, the resulting mixture was mixed with 4 g of a mixture of xylene containing 0.664 mg of titanium tetrabutoxide and heated at 140°C to conduct a reaction to produce a clear light yellow graft polymer.

Furthermore, Japanese Patent Application Laid-Open No. 181302/2001 (JP-2001-181302A, Patent Document 3) discloses a process for producing a cyclic ester-modified cellulose derivative. The process comprises a ring-opening graft polymerization of a cyclic ester to a cellulose derivative having a hydroxyl group in the presence of a ring-opening polymerization catalyst for the cyclic ester in a solvent. The solvent has a boiling point of not lower than 140°C at a normal pressure, can dissolve the cellulose derivative having a hydroxyl group and the cyclic ester-modified cellulose derivative, and has no functional group which acts as an initiator for the ring-opening polymerization of the cyclic ester. Such a solvent includes, e.g., cyclohexanone and γ-butyrolactone. According to the process of the document, in the graft polymerization, the use of a good solvent for the cellulose derivative, which has a boiling point of not lower than 140°C, suppresses an increase in the viscosity of the reaction system. Specifically, in Example 1, to a reactor vessel, 100 parts of a cellulose acetate in an absolute dry state, 50 parts of a purified ε-caprolactone, and 50 parts of a purified cyclohexanone were added, and the water concentration of the reaction system was adjusted to not more than 0.1% by mass. The mixture was heated to 180°C to dissolve the cellulose acetate homogenously. Then 0.24 part of tin (II) octylate as a catalyst was added dropwise thereto to conduct the reaction of the mixture for two hours.

However, these processes described in the documents produce a large amount of a homopolymer (oligomer) of the cyclic ester as a by-product. Such an oligomer of the cyclic ester has a carboxyl group and increases the acid value of the product. Therefore, the existence of such an oligomer in the product renders the cellulose acylate liable to hydrolyze. Moreover, the oligomer impairs the appearance of the product. In addition, the bleed out of the oligomer degrades the quality of an article obtained from the product.

Accordingly, it is preferable to remove the oligomer of the cyclic ester from the product. The removal of the oligomer is also conducted in the above-mentioned documents. For example, in Example 1 of Patent Document 1, acetone was added to the obtained graft polymer to dissolve the graft polymer. Then the obtained solution was subjected to precipitation with tetrachloromethane to give a solid. The resulting solid was subjected to a vacuum drying and then to Soxhlet's extraction with tetrachloromethane for ten hours. Moreover, in Example 1 of Patent Document 2, ε-caprolactone and xylene were added to cellulose acetate to dissolve the cellulose acetate. A mixture of xylene and titanium tetrabutoxide was added to the obtained solution to conduct the reaction of the mixture and the solution at 140°C. After the reaction, the reaction product was subjected to reprecipitation and then Soxhlet' s extraction for ten hours.

As mentioned above, since the graft polymerization of the cyclic ester usually produces an oligomer of the cyclic ester as a by-product, the by-product is removed by reprecipitation.

Unfortunately, the removal of the oligomer of the cyclic ester (such as reprecipitation) is not widely used because of an industrially large amount of a solvent for the removal and the complexity of the steps for the removal. The removal also causes an increase of the production cost, which is undesirable. In addition, in the removal, a low molecular weight component which contributes to flowability, in particular, a low molecular weight component which is grafted to the cellulose derivative is removed with the oligomer of the cyclic ester, whereby the flowability of the product is deteriorated.

Therefore, it has been desired to inhibit the generation (or formation) of such an oligomer as a by-product.
[Patent Document 1] JP-59-86621A (Claims, the upper left column and the upper right column of page 2, Examples)
[Patent Document 2] JP-60-188401A (Claims, the lower right column of page 2, Examples)
[Patent Document 3] JP-2001-181302A (Claims, paragraph No. [0023] and paragraph No. [0029], Examples)

### DISCLOSURE OF THE INVENTION

### PROBLEMS TO BE SOLVED BY THE INVENTION

It is therefore an object of the present invention to provide a process for producing a glucan derivative modified with a cyclic ester (e.g., a cellulose acylate modified with a cyclic ester such as a cellulose acetate modified with a cyclic ester), which greatly suppresses a homopolymerization (or oligomerizatin) of the cyclic ester, a glucan derivative modified with a cyclic ester (or a modified glucan derivative) which is obtained by the process, and a molded product comprising the modified glucan derivative.

Another object of the present invention is an efficient process for producing a glucan derivative modified with a cyclic ester at a high grafting efficiency in spite of using an aromatic hydrocarbon solvent, a modified glucan derivative which is obtained by the process, and a molded product comprising the modified glucan derivative.

### MEANS TO SOLVE THE PROBLEMS

The inventors of the present invention made intensive studies to achieve the above objects and finally found that, in a process for producing a glucan derivative modified with a cyclic ester which comprises allowing a glucan derivative having a hydroxyl group (or one or a plurality of hydroxyl group(s)) (e.g., a cellulose derivative) to react with a cyclic ester in a solvent in the present of a ring-opening polymerization catalyst, a combination use of a specific catalyst and a specific amount of a specific aromatic hydrocarbon solvent can remarkably suppress a homopolymerization of the cyclic ester, in spite of using an aromatic hydrocarbon solvent which does not usually dissolve (hardly dissolves) the glucan as the specific solvent. Specifically, the glucan derivative modified with a cyclic ester is a compound in which the cyclic ester is graft-polymerized to the glucan derivative having a hydroxyl group. The present invention was accomplished based on the above findings.

That is, the production process of the present invention is a process for producing a glucan derivative modified with a cyclic ester, which comprises allowing a glucan derivative having a hydroxyl group (or one or a plurality of hydroxyl group(s)) to react with a cyclic ester in a solvent in the presence of a ring-opening polymerization catalyst to graft-polymerize the cyclic ester to the glucan derivative. In addition, in the process, (1) the ring-opening polymerization catalyst is a metal complex which by itself does not initiate (or which does not act as an initiator for) the polymerization of the cyclic ester; (2) the solvent comprises an aromatic hydrocarbon solvent (an aromatic hydrocarbon) which has a solubility in water of not more than 10% by weight at 20°C; and (3) the proportion of the solvent is not less than 60 parts by weight relative to 100 parts by weight of the glucan derivative having a hydroxyl group.

The glucan derivative having a hydroxyl group (or one or a plurality of hydroxyl group(s)) may be a cellulose C₂₋₄acylate having an average degree of substitution of 1.5 to 2.95.

Moreover, the cyclic ester may be at least one member selected from the group consisting of a C₄₋₁₀lactone and a cyclic C₄₋₁₀diester.

In addition,the ring-opening polymerization catalyst may be a metal complex having an anionic ligand corresponding to at least one member selected from the group consisting of a halogen atom, oxygen atom, a hydrocarbon, a β-diketone, and a carboxylic acid. In particular, such a metal complex may comprise a tin complex having an anionic ligand corresponding to at least an aliphatic carboxylic acid [That is, a metal complex comprising a tin as a central metal and an anionic ligand comprising at least an aliphatic carboxylic acid] (e.g., a tin carboxylate). In the process, the proportion of the ring-opening polymerization catalyst (to be used) may be, for example, about 0.3 to 1.2 parts by weight relative to 100 parts by weight of the glucan derivative having a hydroxyl group.

The solvent may comprise at least one member selected from the group consisting of a C₆₋₁₂arene and a haloC₆₋₁₂arene. In addition, the proportion of the solvent may be, for example, about 80 to 350 parts by weight relative to 100 parts by weight of the cyclic ester. Furthermore, the proportion of the solvent may be, for example, about 40 to 95 parts by weight relative to 100 parts by weight of the total amount of the glucan derivative having a hydroxyl group and the cyclic ester.

In the process, it is preferable that the reaction be conduct under the water content (or the moisture) as low as possible. For example, the glucan derivative having a hydroxyl group and the cyclic ester may be reacted with each other under the condition of a water content of not more than 0.3% by weight relative to the total amount of the glucan derivative having a hydroxyl group, the cyclic ester, and the solvent.

Representative examples of the process include a process in which the reaction is conducted under the following conditions:
(i) the glucan derivative having a hydroxyl group is a cellulose C₂₋₄acylate having an average degree of substitution of 1.9 to 2.6;
(ii) the ring-opening polymerization catalyst comprises at least one organotin complex selected from the group consisting of a tin C₆₋₁₀alkanecarboxylate and a mono-or diC₃₋₈alkyltinC₆₋₁₀alkanecarboxylate;
(iii) the solvent comprises a C₆₋₁₀arene;
(iv) the proportion of the solvent is 65 to 250 parts by weight relative to 100 parts by weight of the glucan derivative having a hydroxyl group and the proportion of the solvent is 90 to 280 parts by weight relative to 100 parts by weight of the cyclic ester; and
(v) the water content of the total amount of the glucan derivative having a hydroxyl group, the cyclic ester, and the solvent is not more than 0.15% by weight.

According to the present invention, the modified glucan derivative is obtained while suppressing the homopolymerization of the cyclic ester greatly. For example, the process can produce the modified glucan derivative at a high graft efficiency of not less than 90%, which is represented by the formula [A1/(A1+A2)] x 100(%), assuming that the amount of the cyclic ester graft-polymerized to the glucan derivative is A1 (mol) and the amount of the homopolymerized cyclic ester is A2 (mol).

The present invention includes a process for suppressing a homopolymerization of a cyclic ester in a process for producing a modified glucan derivative which comprises graft-polymerizing a cyclic ester to a glucan derivative having a hydroxyl group in a solvent in the presence of a ring-opening polymerization catalyst, in which the graft-polymerization is conducted under the following conditions:
(1) the ring-opening polymerization catalyst is a metal complex which by itself does not initiate the polymerization of the cyclic ester;
(2) the solvent comprises an aromatic hydrocarbon solvent having a solubility in water of not more than 10% by weight at 20°C; and
(3) the proportion of the solvent is not less than 60 parts by weight relative to 100 parts by weight of the glucan derivative having a hydroxyl group.

The present invention includes the modified glucan derivative obtained by the above-mentioned production process, in which the cyclic ester is graft-polymerized to the glucan derivative. In addition, the present invention includes a molded product (or a molded article), which comprises the modified glucan derivative (a modified glucan derivative obtainable by the above-mentioned production process).

Incidentally, in this specification, the term "the average degree of substitution" means the average of degrees (or proportion) of substituted (such as etherified and esterified) hydroxyl groups (e.g., acyl groups) in 2-, 3-, and 6-positions of a glucose unit (or an average number of mole of hydroxyl group substituted in 2-, 3-, and 6-positions of 1 mol of a glucose unit). In other words, the above-mentioned term has the same meaning as "the average degree of substitution" of a cellulose ester or the like.

### EFFECTS OF THE INVENTION

According to the production process of the present invention, using a combination of a specific catalyst and a specific amount of a specific solvent makes it possible to obtain a glucan derivative modified with a cyclic ester (e. g. , a cellulose acylate modified with a cyclic ester such as a cellulose acetate modified with a cyclic ester) with a greatly suppressed homopolymerization (or oligomerization) of a cyclicester. In addition, according to the production process of the present invention, owing to the suppressed homopolymerization of the cyclic ester, the glucan derivative modified with a cyclic ester is efficiently produced at a high grafting efficiency in spite of using an aromatic hydrocarbon solvent (e.g., xylene).

### DETAILED DESCRIPTION OF THE INVENTION

The production process of the present invention comprises allowing a glucan derivative having a hydroxyl group to react with a cyclic ester in a solvent in the presence of a ring-opening polymerization catalyst to give a glucan derivative modified with a cyclic ester in which the cyclic ester is graft-polymerized to the glucan derivative (or in which the cyclic ester is graft-polymerized to the hydroxy group). That is, the obtained glucan derivative which is modified with a cyclic ester is a compound comprising the glucan derivative having a hydroxyl group and a graft chain formed by graft-polymerization of the cyclic ester to the hydroxyl group thereof. In the process the reaction of the glucan derivative and the cyclic ester is conducted under the following specific conditions (1), (2), and (3):

(1) the ring-opening polymerization catalyst is a metal complex which by itself does not initiate the polymerization of the cyclic ester;
(2) the solvent comprises an aromatic hydrocarbon solvent which has a solubility in water of not more than 10% by weight at 20°C; and
(3) the proportion of the solvent is not less than 60 parts by weight relative to 100 parts by weight of the glucan derivative having a hydroxyl group.

### (Glucan derivative having a hydroxyl group)

The glucan derivative having a hydroxyl group (or one or a plurality of hydroxyl group (s)) is not particularly limited to a specific one as long as the glucan derivative has a hydroxyl group (or one or a plurality of hydroxyl group (s)). The glucan derivative may usually be a glucan derivative in which some of the hydroxyl groups in a glucose unit of the glucan have been derivatized (such as etherized or esterified). That is, the glucan derivative having a hydroxyl group is practically a glucan derivative having some residual hydroxyl groups which remain intact after a derivatization of a glucan. In the derivatization, some of the hydroxyl groups in a glucose unit (a glucose skeleton) of the glucan (hydroxyl groups located in 2-, 3-, and 6-positions in a glucose unit) are replaced with acyl groups or the like. The glucan derivatives having a hydroxyl group may be used singly or in combination.

The glucan is not particularly limited to a specific one and may include, e.g., β-1,4-glucan, α-1,4-glucan, β-1,3-glucan, and α,-1,6-glucan. Representative examples of the glucan include a polysaccharide (e.g., a cellulose, an amylose, a starch, a lentinan, and a dextran). Among these glucans, from an industrial viewpoint, the preferred one includes a cellulose or a starch (or an amylose), in particular, a cellulose. The glucans may be used in singly or in combination.

Concrete examples of the glucan derivative include an etherized glucan, an esterified glucan, and others. Hereinafter, the derivatized cellulose (the cellulose derivative) will be described as a representative example of the glucan derivative.

The cellulose derivative may include a cellulose ether [for example, an alkyl cellulose (e.g., a C₁₋₄alkyl cellulose such as methyl cellulose or ethyl cellulose), a hydroxyalkyl cellulose (e.g., a hydroxyC₂₋₄alkyl cellulose such as hydroxyethyl cellulose or hydroxypropyl cellulose), a hydroxyalkylalkyl cellulose (e.g., a hydroxyC₂₋₄alkylC₁₋₄alkyl cellulose such as hydroxyethylmethyl cellulose or hydroxypropylmethyl cellulose), a cyanoalkyl cellulose (such as cyanoethyl cellulose), and a carboxyalkyl cellulose (such as carboxymethyl cellulose)], a cellulose ester (an acyl cellulose or a cellulose acylate; an ester of an inorganic acid with a cellulose (such as cellulose nitrate or cellulose phosphate); and an ester of a mixed acid of an inorganic acid and an organic acid with a cellulose (such as cellulose nitrate acetate).

The preferred cellulose derivative includes an acyl cellulose (or a cellulose acylate). An acyl group of the cellulose acylate is suitably selected according to applications and may include, for example, an alkylcarbonyl group [e.g., a C₂₋₁₀alkylcarbonyl group such as acetyl group, propionyl group, or butyryl group (e.g., a C₂₋₈alkylcarbonyl group, preferably a C₂₋₆alkylcarbonyl group, and more preferably a C₂₋₄alkylcarbonyl group)], a cycloalkylcarbonyl group (e.g., a C₅₋₁₀cycloalkylcarbonyl group such as cyclohexylcarbonyl group), and an arylcarbonyl group (e.g., a C₇₋₁₂arylcarbonyl group such as benzoyl group or carboxybenzoyl group). One or not less than two of species of the acyl groups may be joined to the glucose unit of the cellulose. Among these acyl groups, an alkylcarbonyl group is preferred. Especially, it is preferable that at least acetyl group(s) bind to the glucose unit. For example, it is possible that only acetyl group binds to the glucose or that acetyl group and the other acyl group (e.g., a C₃₋₄acyl group) bind thereto.

Representative examples of the cellulose acylate include a cellulose C₂₋₆acylate (e.g., cellulose acetate, cellulose propionate, cellulose butylate, cellulose acetate propionate, and cellulose acetate butylate), preferably a cellulose C₂₋₄acylate, and others. In particular, cellulose acetate (particularly cellulose diacetate) is preferred.

In the glucan derivative having a hydroxyl group (particularly, a cellulose derivative, e.g., a cellulose acylate such as cellulose acetate), the average degree of substitution is not particularly limited to a specific one and may be selected from the range of about 0.5 to 2.99 (e.g., about 0.7 to 2.98). The average degree of substitution may be, for example, about 0.8 to 2.97 (e.g., about 1 to 2.96), preferably about 1.5 to 2.95 (e.g., about 1.8 to 2.8), more preferably about 1.9 to 2.6 (e.g., about 2.0 to 2.5), usually not less than 2.25 [e.g., not less than 2.3 (e.g., about 2.3 to 2.95), preferably about 2.35 to 2.93 (e.g., about 2.38 to 2.88)]. Incidentally, the average degree of substitution means an average degree of substitution of an acyl group or the like, or an average number of moles of the derivatized hydroxyl groups in 2-, 3-, and 6-positions of a glucose unit.

In the glucan derivative having a hydroxyl group (e. g. , a cellulose derivative such as a cellulose acylate) has the proportion of the hydroxyl group relative to 1 mol of a glucose unit is not particularly limited to a specific one and may be, for example, about 0.1 to 2.5 mol (e.g., about 0.15 to 2 mol), preferably about 0.2 to 1.5 mol (e.g., about 0.3 to 1.2 mol), more preferably about 0.4 to 1 mol (e.g., about 0.5 to 0.7 mol), on the average. Incidentally, the proportion of the hydroxyl group means a proportion of the residual hydroxyl group or the hydroxyl group in the glucose unit.

The degree of polymerization of the glucan derivative having a hydroxyl group (or the glucan) is not particularly limited to a specific one as long as the modified glucan derivative obtainable by the process of the present invention can be used for a desirable purpose. The modified glucan derivative obtainable by the present invention can suitably be used as long as the degree of polymerization of the modified glucan derivative is almost the same to that of a product commercially-available at the moment. For example, the average degree of polymerization of the glucan derivative (the viscosity average degree of polymerization) may be selected from the range of not less than 70 (e.g., about 80 to 800), about 100 to 500, preferably about 110 to 400, and more preferably about 120 to 350.

The glucan derivative having a hydroxyl group used for the reaction may be a glucan derivative having a water content as low as possible for a more efficient suppression of the homopolymerization of the cyclic ester in the reaction. For example, the water content of the glucan derivative having a hydroxyl group is preferably as low as possible and may be not more than 0.5% by weight [about 0 (or the limit of detection) to 0.3% by weight], preferably not more than 0.1% by weight (e.g., about 0.0001 to 0.05% by weight), more preferably not more than 0. 05% by weight (e. g. , about 0. 0002 to 0.03% by weight), and particularly not more than 0.01% by weight (e.g., about 0.0003 to 0.005% by weight). Incidentally, the water content of the glucan derivative having a hydroxyl group can be reduced by a conventional drying process such as drying under a reduced pressure. Drying under a reduced pressure may be conducted under warming (e.g., about 50 to 200°C, preferably about 70 to 180°C, and more preferably about 90 to 150°C).

Incidentally, a commercially-available compound (e. g. , a cellulose acetate) may be used as the glucan derivative having a hydroxyl group (such as a cellulose acylate), or the glucan derivative may be conventionally synthesized. For example, a cellulose acylate is usually obtainable by activating a cellulose with an organic carboxylic acid (such as acetic acid) corresponding to the acyl group, acylating the cellulose with an acylating agent (e.g. , an acid anhydride such as acetic anhydride) in the presence of a sulfate catalyst, to produce a triacyl ester (in particular, cellulose triacetate), decomposing an excess amount of the acylating agent (in particular, an acid anhydride such as acetic anhydride), and deacylating or saponifying (hydrolyzing or ripening) the resulting triacyl ester to adjust the degree of acylation thereof. The acylating agent may be an organic acid halide such as acetic chloride. A C₂₋₆alkanecarboxylic anhydride (such as an acetic anhydride, propionic anhydride, or butyric anhydride) may usually be employed as the acylating agent.

Incidentally, a common process for producing cellulose acylate may be referred to "Wood Chemistry (the first volume) " (Migita et.al, issued by Kyoritsu Shuppan Co., Ltd. in 1968, pages 180 to 190). In addition, other glucans (such as a starch) may be acylated (and deacylated) by the same process as the acylation (and deacylation) of the cellulose acylate.

### (Cyclic ester)

The cyclic ester is not particularly limited to a specific one as long as the cyclic ester is a cyclic compound having at least one ester group (-COO-) in a molecular thereof and being graft-polymerizable to the glucan. The cyclic ester may include, for example, a lactone (or a cyclic monoester, e. g. , a C₃₋₂₀lactone such as β-propiolactone, β-butyrolactone, γ-butyrolactone, δ-valerolactone, ε-caprolactone, laurolactone, enantholactone, dodecanolactone, stearolactone, α-methyl-ε-caprolactone, β-methyl-ε-caprolactone, γ-methyl-ε-caprolactone, β,δ-dimethyl-ε-caprolactone, or 3,3,5-trimethyl-ε-caprolactone, preferably a C₄₋₁₅lactone, and more preferably a C₄₋₁₀lactone), and a cyclic diester [for example, a cyclic C₄₋₁₅diester, e.g., a glycolide and a lactide (such as L-lactide, D-lactide, or a mixture thereof), preferably a cyclic C₄₋₁₀diester].

Among these cyclic esters, the preferred cyclic ester may suitably be selected to adjust the melting processability or the mechanical properties of the obtainable cyclic ester-modified glucan derivative according to the applications or the intended use. The preferred one includes, for example, a C₄₋₁₀lactone (e.g., β-butyrolactone, δ-valerolactone, and ε-caprolactone) and a cyclic C₄₋₁₀diester [e.g., a lactide (such as L-lactide, D-lactide, or a mixture thereof)]. The more preferred cyclic ester is not particularly limited to a specific one as long as the cyclic ester can be commercially-available and includes, for example, ε-caprolactone, a lactide (such as L-lactide, D-lactide, or a mixture thereof), and others.

The cyclic esters may be used singly or in combination. The preferred combination use of more than one cyclic esters is not particularly limited to a specific one as long as the melting processability or mechanical properties of the obtainable cyclic ester-modified glucan derivative is adjusted to the applications or the intended use, and includes a combination of, for example, ε-caprolactone and a lactide (such as L-lactide, D-lactide, or a mixture thereof).

In the ring-opening polymerization (graft polymerization) reaction, the proportion of the cyclic ester (the proportion of the cyclic ester to be used) is not particularly limited to a specific one and may be, for example, about 5 to 1000 parts by weight (e.g., about 10 to 400 parts by weight), preferably about 20 to 200 parts by weight, more preferably about 30 to 150 parts by weight (e.g., about 35 to 130 parts by weight), and usually about 50 to 170 parts by weight (e.g., about 60 to 140 parts by weight, preferably about 65 to 120 parts by weight) relative to 100 parts by weight of the glucan derivative having a hydroxyl group.

The water content of the cyclic ester used for the reaction is preferably as low as possible and may be not more than 0.5% by weight [about 0 (or the limit of detection) to 0.3% by weight], preferably not more than 0.1% by weight (e.g., about 0.0001 to 0.05% by weight), and more preferably not more than 0.01% by weight (e.g., about 0.0003 to 0.005% by weight) relative to the whole cyclic ester. Incidentally, the water content of the cyclic ester can be reduced by a conventional process, e.g., a distillation, a contact with a drying agent (such as magnesium sulfate), and others.

### (Ring-opening polymerization catalyst)

In the present invention, as described above, a metal complex (or a metal compound) which acts as a ring-opening polymerization (or graft polymerization) catalyst for the cyclic ester but by itself does not initiate (or but does not act as an initiator for) the polymerization of the cyclic ester, is used as the graft polymerization catalyst. Incidentally, the term "a metal complex which by itself does not initiate the polymerization of the cyclic ester" may be a metal complex capable of initiating the polymerization of the cyclic ester in the coexistence (in a combination use) with a compound having an active hydrogen (e.g., water, an alcohol, and an amine) but does not (substantially) initiate the polymerization of the cyclic ester without the coexistence with a compound having an active hydrogen (particularly, water). These metal complexes can initiate the ring-opening polymerization of the cyclic ester only in the coexistence with a compound having an active hydrogen containing group such as a hydroxyl group (e.g., a hydroxyl group of the glucan derivative) or an amino group (excluding a tertiary amino group). That is, the inventors found that the use of the above-mentioned metal complex as a graft polymerization catalyst does not initiate the homopolymerization of the cyclic ester induced by a ring-opening polymerization catalyst (or substantially does not induce the homopolymerization of the cyclic ester or greatly suppresses the homopolymerization of the cyclic ester), which leads to the efficient production of the graft polymer.

Incidentally, the metal complex which can by itself initiate the polymerization of the cyclic ester may include a metal complex having a ligand such as an alkoxy group or an amino group (e.g., a metal alkoxide such as tri(isopropoxy)aluminum, tetra(n-butoxy)titanium, tetra(isopropoxy)titanium, or tributyltin monomethoxide). In the ring-opening polymerization of the cyclic ester in the presence of the metal complex, i.e., the metal complex which is the ring-opening polymerization catalyst and has an alkoxy group, an amino group, or the like, as a ligand (hereinafter, referred as an inappropriate metal complex), the rings of the cyclic esters are opened, and the resulting esters, which have a ring-opened structure, are successively inserted between the ligands and the metal located in the center of the complex (or the central metal). As a result, the homopolymerization of the cyclic ester for which the resulting metal complex acts as a polymerization initiator is induced. Accordingly, in the mixture system of the glucan derivative having a hydroxyl group and the cyclic ester under the coexistence with the inappropriate metal complex, not only the graft polymerization of the cyclic ester to the glucan derivative, but also the homopolymerization of the cyclic ester for which the metal complex acts as the initiator proceeds. In addition to an objective graft polymer, a large amount of a homopolymer (an oligomer) of the cyclic ester as a by-product is produced, whereby the graft efficiency is greatly deteriorated.

Therefore, in the present invention, the use of the specific ring-opening polymerization catalyst, concretely, the combination use of the specific catalyst with a specific solvent suppresses the polymerization of the cyclic ester alone (that is, the homopolymerization of the cyclic ester).

The metal complex comprises a central metal and a ligand coordinated with the central metal. Concrete example of the ligand constituting the metal complex (or a ligand which exhibits no polymerization activity to the cyclic ester or a ligand inactive to the cyclic ester) includes, a ligand corresponding to carbon monoxide (CO), a halogen atom (such as fluorine atom or chlorine atom), oxygen atom, a hydrocarbon [e. g. , an alkane (a C₁₋₂₀alkane such as methane, ethane, propane, or butane, preferably a C₁₋₁₀alkane, and more preferably a C₁₋₆alkane), a cycloalkane (e.g., a C₄₋₁₀cycloalkane such as cyclopentane or cyclohexane), and an arene (a C₆₋₁₀arene such as benzene or toluene)], a β-diketone (e.g., a β-C₅₋₁₀diketone such as acetylacetone), and a carboxylic acid [for example, an aliphatic carboxylic acid such as an alkanecarboxylic acid (e.g., a C₁₋₂₀alkanecarboxylic acid such as acetic acid, propionic acid, butanoic acid, pentanoic acid, hexanoic acid, heptanoic acid, octanoic acid, 2-ethylhexanoic acid, nonanoic acid, decanoic acid, or lauric acid, preferably a C₂₋₁₂alkanecarboxylic acid); and an aromatic carboxylic acid such as benzoic acid], and carbonic acid or boric acid (e. g. , an anioic ligand such as a halo, an alkyl, an acylacetonato, or an acyl). One or more than one of these ligands may be coordinated with a central metal. The ligand may comprise at least an anionic ligand (an anionic ligand corresponding to a halogen atom, oxygen atom, a hydrocarbon, a β-diketone, a carboxylic acid, or the like), in particular, an anionic ligand corresponding to an aliphatic carboxylic acid as long as the ligand exhibits no polymerization activity.

Furthermore, the central metal of the ring-opening polymerization catalyst may include, for example, a representative metal [e.g., an alkali metal (such as lithium, sodium, or potassium), an alkaline earth metal (such as magnesium, calcium, or strontium), a metal of the Group 12 of the Periodic Table of Elements (such as zinc), a metal of the Group 13 of the Periodic Table of Elements (such as aluminum), a metal of the Group 14 of the Periodic Table of Elements (such as germanium or tin), and a metal of the Group 15 of the Periodic Table of Elements (such as antimony or bismuth)] and a transition metal [e.g., a rare earth metal (or a metal of the Group 3 of the Periodic Table of Elements such as yttrium, lanthanum, neodymium, samarium, europium, or erbium), a metal of the Group 4 of the Periodic Table of Elements (such as titanium, zirconium, or ytterbium), a metal of the Group 5 of the Periodic Table of Elements (such as niobium), a metal of the Group 6 of the Periodic Table of Elements (such as molybdenum), and a metal of the Groups 7 to 9 of the Periodic Table of Elements (such as iron)]. The preferred central metal includes tin or the like.

The ring-opening polymerization catalyst is not particularly limited to a specific one as long as the catalyst by itself does not initiate the polymerization of the cyclic ester. Representative examples of the ring-opening catalyst include a metal complex free from an alkoxy group (and a hydroxyl group) and/or an amino group (an amino group other than a tertiary amino group) as a ligand (e.g., a carboxylate, a carbonate, a borate, an oxide, and an acetylacetonate chelate). Concrete examples of the ring-opening polymerization catalyst include a representative metal compound or a representative metal complex, for example, an alkali metal compound (e.g., an alkali metal alkanecarboxylate such as sodium carbonate, potassium carbonate, lithium carbonate, sodium acetate, potassium acetate, lithium acetate, sodium stearate, lithium stearate, or lithium benzonate), an alkaline earth metal compound (e. g. , an alkaline earth metal alkanecarboxylate such as calcium carbonate, barium carbonate, magnesium carbonate, strontium carbonate, calcium acetate, barium acetate, magnesium acetate, strontium acetate, calcium stearate, barium stearate, magnesium stearate, or strontium stearate), a zinc compound (such as zinc acetate or zinc acetylacetonate), an aluminum complex or an aluminum compound (e.g., a trialkylaluminum such as trimethylaluminum or triethylaluminum), a germanium complex or a germanium compound (e.g., germanium oxide), a tin complex or a tin compound [for example, a tin carboxylate compound such as a tin carboxylate (e. g. , a tin C₂₋₁₈alkanecarboxylate such as tin octylate (e. g. , stannousoctylate), preferably a tin C₄₋₁₄alkanecarboxylate), or an alkyltin carboxylate (e.g., a mono- or diC₁₋₁₂alkyltin C₂₋₁₈alkanecarboxylate such as dibutyltin diacetate, dibuthyltin dilaurate, monobutyltin trioctylate, monobutyltin tris(2-ethylhexanoate), dibutyltin bis(2-ethylhexanoate), or dibutyltin dilaurate, preferably a mono- or diC₂₋₁₀alkyltin C₂₋₁₄alkanecarboxylate); an alkyltin oxide (e.g., a mono- or dialkyltin oxide such as monobutyltin oxide, dibutyltin oxide, or diisobutyltin oxide); a tin halide (such as tin chloride); a tin halide acetylacetonato (such as tin chloride acetylacetonato); and a salt of an inorganic acid with tin (such as tin nitrate or tin sulfate)], a lead compound (such as lead acetate), an antimony compound (such as antimony trioxide), a bismuth compound (such as bismuth acetate); and a transition metal compound or a transition metal complex, for example, a rare earth metal compound (e.g., a rare earth metal carboxylate such as lanthanum acetate, samarium acetate, europium acetate, erbium acetate, or ytterbium acetate), a titanium compound (such as titanium acetate), a zirconium compound (such as zirconium acetate or zirconium acetylacetonate), a niobium compound (such as niobium acetate), and an iron complex or an iron compound (such as iron acetate or iron acetylacetonato).

Among these ring-opening polymerization catalysts, in particular, a tin complex (or a tin compound), such as a tin carboxylate compound [e.g., a tin carboxylate (e.g., a tin C₂₋₁₀alkanecarboxylate such as stannous octylate), an alkyltin carboxylate (e.g., a mono-or diC₃₋₈alkyltin C₂₋₁₀alkanecarboxylate such as monobutyltin tris(2-ethylhexanoate) or dibutyltin bis(2-ethylhexanoate))] is preffered. The ring-opening polymerization catalysts may be used singly or in combination.

In the graft-polymerization (ring-opening polymerization), the proportion of the ring-opening polymerization catalyst (the proportion of the ring-opening polymerization catalyst to be used) relative to 1 mol of the hydroxyl group of the glucan derivative (more specifically, the glucan in a main chain which is a starting point for the graft-polymerization), may be, for example, about 10⁻⁷ to 10⁻¹ mol, preferably about 5 x 10⁻⁷ to 5 x 10⁻² mol, more preferably about 10⁻⁶ to 3 x 10⁻² mol, particularly about 10⁻⁵ to 10⁻² mol (e.g., about 10⁻⁵ to 8 x 10⁻³ mol), and usually about 2 x 10⁻⁵ to 5 x 10⁻³ mol (e.g., about 2 x 10⁻⁵ to 2 x 10⁻³ mol, preferably about 5 x 10⁻⁵ to 10⁻³ mol, and more preferably about 5 x 10⁻⁵ to 5 x 10⁻⁴ mol).

### (Solvent)

In the present invention, the use of a specific amount of a specific aromatic hydrocarbon solvent having a low solubility in water in combination with the specific catalyst can reduce the water influence on the polymerization system or on the reaction as little as possible, which probably leads to the excellent suppression of the homopolymerization of the cyclic ester. The reasons for the suppression of the homopolymer due to the use of the specific solvent are considered as follows: (1) azeotrope of the specific solvent and water existing in the reaction system; (2) a cluster formation by surrounding water molecules with the specific solvent (or the molecules of the specific solvent); and others. More specifically, (1) owing to the azeotrope of water existing in the system and the specific solvent often having a boiling point around a reaction temperature, the water is expelled from the reaction system (the water becomes a vapor) during the reaction, thereby mitigating the adverse effect of water, which induce the polymerization of the cyclic ester. In addition, (2) for more stable existence of the water molecules, the water molecules form a cluster, in which the positions of the molecules can freely be replaced each other. Such a tendency to the cluster formation becomes more significant in a hydrophobic solvent than in a hydrophilic solvent since the more hydrophobic the system becomes, the more unstable the water molecules become. Therefore, in the hydrophobic solvent, a large cluster of the water molecules is formed to reduce the contact area with the solvent. According to the present invention, the cluster of the specific solvent molecules surrounds the water cluster to restrain the motion and reactivity of the water molecules, thereby inhibiting the polymerization of the cyclic ester for which water acts as an initiator. Moreover, using the solvent which is not less than a specific amount can effectively suppress the water influence of the polymerization system. Therefore, using a specific amount of a specific aromatic hydrocarbon solvent can effectively suppress the homopolymerization of the cyclic ester.

That is, in the present invention, a specific amount of an aromatic hydrocarbon solvent is used. The aromatic hydrocarbon solvent is sometimes referred to as, for simplicity, a solvent or a hydrophobic solvent.

The solubility in water at 20°C of the aromatic hydrocarbon solvent (the aromatic hydrocarbon) is not particularly limited to a specific one and not more than 10% by weight [for example, 0 (or the limit of detection) to 8% by weight]. The solubility may be not more than 7% by weight (e.g., about 0.0001 to 6% by weight), preferably not more than 5% by weight (e.g., about 0.0005 to 4% by weight), more preferably not more than 3% by weight (e.g., about 0.0008 to 2% by weight), and particular not more than 1% by weight (e. g. , about 0.001 to 0.8% by weight). For more efficient suppression of the homopolymerization, the solubility may be not more than 0.7% by weight (e. g. , about 0.002 to 0.5% by weight, preferably about 0.003 to 0.3% by weight, and more preferably about 0.005 to 0.1% by weight, in particular, about 0.007 to 0.05% by weight). An aromatic hydrocarbon solvent having a solubility in water of more than 10% by weight at 20°C is less effective for reducing the water influence on the polymerization system, thereby failing to manage the suppression of the homopolymerization.

In addition, for the reaction of the cyclic ester, the boiling point of the aromatic hydrocarbon solvent may be, for example, not lower than 60°C (e.g., about 70 to 250°C), preferably not lower than 80°C (e. g. , about 85 to 220°C), and more preferably not lower than 90°C (e.g., about 95 to 200°C), in particular not lower than 100°C (e.g., about 105 to 180°C). An aromatic hydrocarbon solvent having an excessively low boiling point makes it difficult to raise the reaction temperature to a suitable one, whereby the rate of polymerization becomes low.

The solvent (more specifically, the aromatic hydrocarbon solvent having a solubility in water of not more than 10% by weight at 20°C) may include, for example, an aromatic hydrocarbon having no halogen atom [for example, a C₆₋₁₂arene, e.g., benzene, an arene having an alkyl group (e.g., a C₁₋₆alkylbenzene such as toluene, xylene (e.g., o-xylene, m-xylene, and p-xylene), and ethylbenzene, preferably a C₁₋₄alkylbenzene, and more preferably a C₁₋₂alkylbenzene), preferably a C₆₋₁₀arene, and more preferably a C₆₋₈arene], and a halogen-containing aromatic hydrocarbon (e.g., a haloC₆₋₁₂arene such as chlorobenzene, dichlorobenzene, chlorotoluene, chloromethylbenzene, or chloroethylbenzene, preferably a haloC₆₋₁₀arene, and more preferably a chloroC₆₋₈arene or the like). These aromatic hydrocarbon solvents may be used singly or in combination.

These solvents may be used singly or in combination. Moreover, the solvent may comprise the aromatic hydrocarbon solvent containing no halogen atom alone or the halogen-containing aromatic hydrocarbon solvent alone, or the solvent may comprise the aromatic hydrocarbon solvent having no halogen atom and the halogen-containing aromatic hydrocarbon solvent.

Incidentally, the solvent may be a solvent which does not dissolve (or hardly dissolves) the glucan derivative having a hydroxyl group, or a solvent capable of dissolving the glucan derivative having a hydroxyl group.

The aromatic hydrocarbon solvent containing no halogen atom may usually be a solvent which does not dissolve the glucan derivative having a hydroxyl group. The halogen-containing aromatic hydrocarbon solvent may usually be a solvent capable of dissolving the glucan derivative having a hydroxyl group.

Incidentally, the solvent which does not dissolve the glucan derivative having a hydroxyl group may be used to form a mixed solvent which may dissolve the glucan derivative having a hydroxyl group. In a mixture system of the glucan derivative having a hydroxyl group and the cyclic ester, the above-mentioned solvent forms a mixed solvent with the cyclic ester, and such a mixed solvent may partly dissolve (or may disperse) or may dissolve the glucan derivative having a hydroxyl group.

Incidentally, the solvent comprises at least the aromatic hydrocarbon solvent. The solvent may comprise the aromatic hydrocarbon solvent alone or, as long as the advantages of the present invention are not deteriorated, the solvent may comprise the aromatic hydrocarbon solvent and other solvents (for example, a solvent having a solubility in water of more than 10% by weight at 20°C and a nonaromatic hydrocarbon solvent having a solubility in water of not more than 10% by weight at 20°C). The solvent may often be a solvent having a solubility in water of not more than 10% by weight at 20°C, e.g., an aromatic hydrocarbon solvent alone or a mixed solvent of an aromatic hydrocarbon solvent and a nonaromatic hydrocarbon solvent having a solubility in water of not more than 10% by weight at 20°C.

The nonaromatic hydrocarbon solvent having a solubility in water of not more than 10% by weight at 20°C may include, for example, a solvent containing no halogen atom (a nonaromatic hydrocarbon solvent containing no halogen atom) and a halogen-containing solvent (a halogen-containing nonaromatic hydrocarbon solvent). The solvent containing no halogen atommay include, for example, an aliphatic hydrocarbon [for example, an alkane (e.g., a C₇₋₂₀alkane such as heptane, octane, nonane, decane, or undecane), and a cycloalkane (e. g. , a C₄₋₁₀cycloalkane such as cyclopentane or cyclohexane), or the like], an aliphatic ketone [for example, a dialkyl ketone (e.g., a C₅₋₁₅dialkyl ketone such as diethyl ketone, methyl n-propyl ketone, methyl isopropyl ketone, methyl n-butyl ketone, methyl iso-butyl ketone, di-n-propyl ketone, diisopropyl ketone, diisobutyl ketone, 2-octanone, 3-octanone, 4-octanone, 2-nonanone, or 3-nonanone)], and a chain ether [for example, a dialkyl ether (e.g. , a C₆₋₁₈dialkyl ether such as di-n-propyl ether or di-n-butyl ether), and an alkyl aryl ether (e.g., anisole)].

The halogen-containing solvent may include, for example, a halogenated hydrocarbon. The halogenated hydrocarbon may include, for example, a haloalkane [for example, a haloC₁₋₁₀alkane such as dichloroethane, trichloroethane, tetrachloroethane, dichloropropane, chloropentane, chlorohexane, or chlorooctane] and a halocycloalkane (for example, a haloC₄₋₁₀cycloalkane such as chlorocyclopentane or chlorocyclohexane), a haloarene (e.g., a haloC₆₋₁₂arene such as chlorobenzene, dichlorobenzene, chlorotoluene, chloromethylbenzene or chloroethylbenzene).

These nonaromatic hydrocarbon solvents may be used singly or in combination.

In a solvent containing a nonaromatic hydrocarbon solvent, the proportion of the aromatic hydrocarbon solvent relative to the nonaromatic hydrocarbon solvent [the former/the latter (weight ratio)] may be about 99/1 to 1/99, preferably about 95/5 to 5/95, and more preferably about 90/10 to 10/90.

Incidentally, in order to control the viscosity or homogeneousness of the reaction system, the solvent may contain a hydrophilic solvent (more specifically, a solvent having a solubility in water of more than 10% by weight at 20°C).

The hydrophilic solvent is not particularly limited to a specific one as long as the solvent has a solubility in water of more than 10% by weight at 20°C and is free from a functional group which acts as an initiator for the ring-opening polymerization of the cyclic ester (e.g., a hydroxyl group and a primary or secondary amino group). The hydrophilic solvent may include, for example, a ketone (e.g., acetone, methyl ethyl ketone, methyl isobutyl ketone, cyclopentanone, and cyclohexanone), an ester (such as methyl acetate and ethyl acetate), a nitrogen-containing solvent (such as nitromethane, acetonitrile, N-methylpyrrolidone, or dimethylformamide), a glycol having in which a terminal hydroxyl group has been modified (e.g., methylglycol acetate), an ether (such as tetrahydrofuran, dioxane, or dioxolane), a sulfoxide (such as dimethyl sulfoxide), and propylene carbonate. These solvents may be used singly or in combination.

In the use of the hydrophilic solvent, it is preferable that the water content of the hydrophilic solvent may be as low as possible. The water content of the whole hydrophilic solvent may be not more than 0.5% by weight [about 0 (or the limit of detection) to 0.3% by weight], preferably not more than 0.1% by weight (e.g., not more than 0.07% by weight), and more preferably not more than 0.04% by weight [e.g., not more than 0.01% by weight (e.g., about 0.0003 to 0.005% by weight)].

Moreover, as long as the advantages of the present invention are not deteriorated, the proportion of the solvent having a solubility in water of more than 10% by weight at 20°C in the whole solvent is not particularly limited to a specific one. The proportion of the solvent having a solubility in water of more than 10% by weight at 20°C may be, for example, not more than 200 parts by weight (e. g. , about 0. 5 to 150 parts by weight), preferably not more than 100 parts by weight (e. g. , about 1 to 80 parts by weight), more preferably not more than 60 parts by weight (e.g., about 2 to 40 parts by weight), and usually not more than 30 parts by weight [e. g. , not more than 10 parts by weight (e.g., about 3 to 10 parts by weight)] relative to 100 parts by weight of the aromatic hydrocarbon solvent (the aromatic hydrocarbon solvent having a solubility in water of not more than 10% by weight at 20°C). An excessively large proportion of the hydrophilic solvent is less effective to reduce the water influence on the polymerization system, thereby failing to manage the suppression of the homopolymerization of the cyclic ester.

Depending on the kinds of the solvent, the proportion of the solvent relative to 100 parts by weight of the glucan derivative having a hydroxyl group is not particularly limited to a specific one and selected from not less than 60 parts by weight (e.g. , about 65 to 500 parts by weight) and may be, for example, about 60 to 450 parts by weight (e.g., about 65 to 400 parts by weight), preferably about 60 to 300 parts by weight (e.g., about 65 to 250 parts by weight), more preferably about 70 to 200 parts by weight (e.g., about 75 to 190 parts by weight), particularly about 80 to 180 parts by weight (e. g. , about 85 to 170 parts by weight), and usually about 90 to 160 parts by weight (e.g., about 95 to 150 parts by weight, preferably about 100 to 160 parts by weight, and more preferably about 110 to 150 parts by weight).

In addition, the proportion of the solvent is not particularly limited to a specific one and may be selected from the range of about 40 to 800 parts by weight (e. g. , about 50 to 600 parts by weight) relative to 100 parts by weight of the cyclic ester. The proportion of the solvent relative to 100 parts by weight of the cyclic ester may be, for example, about 60 to 500 parts by weight (e.g., about 70 to 400 parts by weight), preferably about 80 to 350 parts by weight (e.g., about 85 to 300 parts by weight), more preferably about 90 to 280 parts by weight (e.g., about 95 to 270 parts by weight), particularly about 100 to 250 parts by weight (e.g., about 110 to 240 parts by weight), usually about 100 to 180 parts by weight (e.g., about 110 to 150 parts by weight).

Moreover, the proportion of the solvent is not particularly limited to a specific one and may be selected from the range of about 10 to 200 parts by weight relative to 100 parts by weight of the total amount of the glucan derivative having a hydroxyl group and the cyclic ester. The proportion of the solvent relative to 100 parts by weight of the total amount of the glucan derivative having a hydroxyl group and the cyclic ester may be, for example, about 20 to 180 parts by weight, preferably about 30 to 170 parts by weight, more preferably about 40 to 150 parts by weight, particularly about 50 to 120 parts by weight, and usually about 40 to 95 parts by weight (e. g. , about 45 to 90 parts by weight, preferably about 50 to 85 parts by weight, and more preferably 55 to 80 parts by weight). An excessively low amount of the solvent is less effective to reduce the water influence on the polymerization system, thereby failing to manage the suppression of the homopolymerization. An excessively large amount of the solvent is neither economical nor environment-friendly.

### (Ring-opening polymerization)

The process of the ring-opening polymerization (graft polymerization) is not particularly limited to a specific one as long as in the polymerization the glucan derivative having a hydroxyl group and the cyclic ester are allowed to react with each other in the solvent in the presence of the ring-opening polymerization catalyst. The ring-opening polymerization is usually conducted by mixing each component (the glucan derivative having a hydroxyl group, the cyclic ester, the ring-opening polymerization catalyst, and the solvent).

The ring-opening polymerization may be conducted under a room temperature, usually, under warming for an efficient reaction. Moreover, assuming the boiling point of the solvent is A(°C), the reaction temperature of the ring-opening polymerization is selected from the range of about (A-20) to (A+40) (°C) [e.g., the range of about A to (A+35) (°C)], usually, not lower than the boiling point of the solvent, for example, about A to (A+30) (°C) [e.g., about A to (A+25) (°C)], preferably about A to (A+22) (°C), more preferably about (A+3) to (A+20) (°C), and usually about (A+5) to (A+18)(°C). Incidentally, the boiling point of the mixed solvent as the solvent used in the present invention may mean the boiling point of a pure component, which is lower than that of another pure component in the mixed solvent, or which is the lowest among the pure components in the mixed solvent. In the reaction conducted at a low reaction temperature, the solvent is less effective to reduce the water influence on the polymerization system, thereby failing to manage the suppression of the homopolymerization. On the other hand, the polymerization at a temperature excessively higher than the boiling point of the solvent to be used causes a violent reflux which is difficult to control, an increase in the internal pressure of the system, and others.

Concrete reaction temperature depends on the kinds of solvent and may be, for example, about 60 to 250°C (e.g., about 70 to 240°C), preferably about 80 to 220°C (e.g., about 90 to 200°C), and more preferably 100 to 180°C (e.g., about 105 to 170°C), usually about 110 to 160°C. The reaction may be conducted at a temperature of not higher than 150°C (e.g., about 90 to 145°C, preferably about 100 to 140°C). Incidentally, an excessively low reaction temperature (e.g., a reaction temperature of lower than 60°C) significantly slows the rate of the polymerization. On the other hand, depending on the kinds of the glucan derivative, an excessively high reaction temperature (e. g. , a reaction temperature of higher than 250°C) causes a possible thermal decomposition of the glucan derivative.

The ring-opening polymerization may be conducted under the air or under an inert atmosphere (e.g., nitrogen and a rare gas such as helium). The polymerization is usually conducted under an inert atmosphere. Moreover, the ring-opening polymerization may be conducted under an atmospheric pressure or under an applied pressure. In addition, the graft-polymerization may be conducted with stirring.

Incidentally, for an efficient suppression of the homopolymerization of the cyclic ester or a side reaction, it is preferable that the ring-opening polymerization be conducted in a state which has a water content as low as possible. For example, in the reaction, the water content of the total amount of the glucan derivative having a hydroxyl group, the cyclic ester, and the solvent may be, for example, not more than 0.3% by weight [about 0 (or the limit of detection) to 0.25% by weight], preferably not more than 0.2% by weight (e.g. , about 0.0001 to 0.18% by weight), more preferably not more than 0.15% by weight (e.g., about 0. 0005 to 0.12% by weight), and particularly not more than 0.1% by weight (e.g., about 0.001 to 0.05% by weight).

The reaction time of the ring-opening polymerization is not particularly limited to a specific one and may be, for example, about 10 minutes to 24 hours, preferably 30 minutes to 10 hours, and more preferably about 1 to 6 hours.

The above-mentioned process can efficiently produce the modified glucan derivative (the grafted glucan derivative) in which the cyclic ester is graft-polymerized to the glucan derivative having a hydroxyl group while suppressing the homopolymerization (oligomerization) of the cyclic ester.

For example, the conversion of the cyclic ester in the ring-opening polymerization is selected from the range of not less than 70% (e.g., about 75 to 100%) and may be, for example, not less than 80% (e.g., about 82 to 100%), preferably not less than 85% (e.g., about 88 to 99.9%), more preferably not less than 90% (e.g., about 93 to 99.8%), particularly not less than 95% (e.g., about 97 to 99.6%), and usually not less than 98% (e.g., about 98.5 to 100%).

Furthermore, according to the present invention, the modified glucan derivative may be obtainable at a relatively low conversion of the cyclic ester [e.g., not less than 10% (e.g., about 15 to 70%), preferably not less then 20% (e.g., about 25 to 60%), and more preferably not less than 30% (e.g., about 35 to 50%)]. In the graft-polymerization at a relatively low conversion, the large amount of the cyclic ester efficiently prevents an increase in the viscosity of the reaction system. Incidentally, the residual cyclic ester can be recovered by evaporation or the like in a step after the polymerization.

Moreover, the graft efficiency in the process of the present invention is represented by [A1/(A1+A2)] x 100(%), assuming that the number of moles of the graft-polymerized cyclic ester (or the cyclic ester unit) is A1 (mol) and the number of moles of the cyclic ester (or the cyclic ester unit) constituting the generated homopolymer of the cyclic ester (more specifically, the generated homopolymer as the by-product) is A2 (mol). The graft efficiency may be selected from the range of not less than 70% (e.g., about 75 to 100%), and is not less than 85% (e.g., about 88 to 99.9%), preferably not less than 90% (e.g., about 93 to 99.8%), more preferably not less than 95% (e.g., about 96 to 99.7%), and particularly not less than 97% (e.g., about 98 to 100%). Incidentally, being the higher graft efficiency means that the homopolymerization of the cyclic ester is more suppressed.

As described above, the process of the present invention can greatly suppress the homopolymerization of the cyclic ester without impairing the reactivity of the cyclic ester.

In the modified glucan derivative obtainable by the process of the present invention, the proportion of the graft chain formed by the graft-polymerization of the cyclic ester relative to 1 mol of the glucose unit constituting the glucan is, for example, about 0.01 to 2 mol (e.g., about 0.01 to 1.7 mol), preferably about 0.02 to 1.5 mol (e.g., about 0.03 to 1.2 mol), more preferably about 0.05 to 1 mol (e.g., about 0.07 to 0.8 mol), and particularly about 0.08 to 0.7 mol (e. g. , about 0.09 to 0.5 mol). Incidentally, the graft chain is, in other words, a graft chain formed by the graft-polymerization of the cyclic ester to a hydroxyl group of the glucan or by replacing a hydroxyl group of the glucan with the cyclic ester in the graft-polymerization.

Incidentally, all of the hydroxyl groups, which the glucan derivative originally had, of the modified glucan derivative may be graft-polymerized or some of the above-mentioned hydroxyl groups may remain intact after the graft-polymerization. In such a modified glucan derivative having a residual hydroxyl group (e. g. , a cellulose derivative such as a cellulose acylate), the proportion of the hydroxyl group (the residual hydroxyl group or the hydroxyl group in the glucose unit) relative to the graft chain [the former/the latter (mole ratio)] may be, for example, about 95/5 to 10/90, preferably about 90/10 to 30/70 (e.g., about 85/15 to 50/50), and more preferably about 80/20 to 60/40.

Incidentally, the degree of substitution of the acyl group or the graft chain, the hydroxyl group concentration, the proportion of the graft component, or the like, of the modified glucan derivative may be measured by a conventional method, e. g. , a nuclearmagnetic resonance spectrum (NMR) (such as ¹H-NMR or ¹³C-NMR).

Incidentally, the modified graft derivative usually has a hydroxyl group, for example, a terminal hydroxyl group of the graft chain, a residual hydroxyl group in the glucose unit, and the like. In order to reduce or control the hygroscopic property of the modified graft derivative, if necessary, such a hydroxyl group may be protected by a protecting group.

The protecting group is not particularly limited to a specific one as long as the protecting group is a non-reactive group capable of protecting the hydroxyl group. Examples of the protecting group include, a hydrocarbon group such as an alkyl group [e.g., a C₁₋₁₂alkyl group which may have a substituent (such as a halogen atom) (e. g. , methyl group, ethyl group, propyl group, t-butyl group, 2-cyclohexyl-2-propyl group, hexyl group, chloromethyl group, fluoromethyl group, trichloromethyl group, and trifluoromethyl group) (preferably a C₁₋₆alkyl group) and the like], a cycloalkyl group (e.g., a C₅₋₈cycloalkyl group which may have a substituent, such as a cyclohexyl group), an aromatic hydrocarbon group (e.g., a C₆₋₁₂aryl group such as phenyl group and an aralkyl group such as benzyl group), or a crosslinked cyclic hydrocarbon group (e. g. , a crosslinked bi- to tetracyclic C₃₋₃₀hydrocarbon group which may have a substituent, such as adamantyl group or norbornyl group); an oxacycloalkyl group (e.g., a 5- to 8-membered oxacycloalkyl group such as tetrahydrofuranyl group); an acetal-series protecting group such as an alkoxyalkyl group (e.g., a C₁₋₆alkoxy-C₁₋₆alkyl group such as 1-methoxyethyl group); and an acyl group, e.g., an alkylcarbonyl group (e.g., a C₁₋₁₀alkylcarbonyl group such as acetyl or propionyl, preferably a C₂₋₆alkylcarbonyl group), a cycloalkylcarbonyl group (a C₅₋₈cycloalkylcarbonyl group such as cyclohexylcarbonyl group), an arylcarbonyl group (such as benzoyl), and others.

The protecting groups may be used singly or in combination for protecting the hydroxyl group.

Process for protecting the hydroxyl group may include a process comprising allowing the modified glucan derivative obtained by the above-mentioned process, in which the cyclic ester has been graft-polymerized, to react with a protecting agent (a protecting agent corresponding to the protecting group for the hydroxyl group). The protecting agent is not particularly limited to a specific one as long as the protecting agent is a compound corresponding to the protecting group (or a compound having a protecting group) and capable of forming a bond with the hydroxyl group through the reaction. For example, a metal alkoxide or the like may be used as a protecting agent having an alkyl group as the protecting group, and an acylating agent or the like may be suitably used as a protecting agent having an acyl group as the protecting group. Examples of the acylating agent include an acid halide (e.g., an alkylcarbonyl chloride such as acetyl chloride or propionyl chloride), an acid anhydride (such as acetic anhydride), in addition, an alkenyl acylate [for example, 1-alkenyl acylate (e.g., an isopropenyl C₂₋₆alkanecarboxylate such as isopropenyl acetate)], or the like. The protecting agents (e.g., the acylating agents) may be used singly or in combination. The amount of the protecting agent is not particularly limited to a specific one and may be about 0.9 to 8 mol (e.g., about 1 to 6 mol), and preferably about 1.2 to 5 mol relative to 1 mol of the hydroxyl group.

The reaction of the glucan derivative and the protecting agent may use a catalyst, for example, a base catalyst {e.g., an inorganic base such as a metal hydroxide or a metal carbonate; and an organic base such as an amine or a metal carboxylate}, an acid catalyst {e.g., an inorganic acid (such as sulfuric acid) or an organic acid [e.g., an organic sulfonic acid and an organic carboxylic acid]}, and others. The catalysts may be used singly or in combination.

Moreover, the reaction of the glucan derivative and the protecting agent may be conducted without a solvent or in a solvent (a non-reactive solvent to the protecting agent). It is only necessary that the solvent be a solvent non-reactive to the protecting agent. The solvent may include, for example, an ether, an ester, a ketone, a halogen-containing solvent, an aromatic hydrocarbon, and a nitrogen-containing solvent (such as pyridine). The solvents may be used singly or in combination.

The reaction of the glucan derivative and the protecting agent may be conducted at a room temperature or under heating, usually, under heating (e. g. , about 40 to 150°C, and preferably about 50 to 130°C). In addition, the reaction of the glucan derivative and the protecting agent may be conducted under an atmospheric pressure or an applied pressure. Furthermore, the reaction may be carried out with stirring or the reaction may be carried out under the air or under an inactive atmosphere (such as nitrogen or a rare gas). Incidentally, the reaction time may be, for example, about 30 minutes to 48 hours, and preferably about 1 to 24 hours.

Incidentally, the protection of the hydroxyl group may be conducted by separating (and purifying) the product obtained through the graft-polymerization from the reaction system and allowing the separated (and purified) graft-polymerized product to react with the protecting agent. The protection of the hydroxyl group may also be conducted successively in the same reaction system after the graft-polymerization. In the protection of the hydroxyl group in the same reaction system, for reducing the viscosity of the reaction system, according to need, the solvent may be added to the reaction system or a significant or an excessive amount of the cyclic ester for the graft-polymerization may intentionally be used to utilize the surplus of the cyclic ester as the solvent.

In the modified glucan derivative having a hydroxyl group protected by the protecting group as mentioned above, the proportion of the protecting group (or the degree of protection of the hydroxy group in the graft chain) relative to 1 mol of the graft chain may be selected from the range of 0.7 to 1 mol, for example, may be about 0.9 to 1 mol, preferably about 0.95 to 0.999 mol.

The modified graft derivative sometimes has carboxyl groups, however, the amount of the carboxyl groups is very small. In such a case, the carboxyl group may be protected (or sealed) as well as the residual hydroxyl group. The protecting agent corresponding to the protecting group for the carboxyl group may include a carbodiimide compound or the like. Incidentally, the protection of the carboxyl group may be conducted under the same condition as in the protection of the hydroxyl group.

The reaction mixture after the reaction (after the graft polymerization or after the graft polymerization and the protection of the hydroxyl group) may be separated and purified by a conventional method, e.g., filtration, condensation, distillation, extraction, neutralization, precipitation, or a combination thereof.

The modified glucan derivative obtainable by this manner may be used as a thermoplastic resin in the form of a powder, a pellet (such as a resin pellet or a master batch pellet), a composition containing a solvent (such as a dope or a coating composition), or the like.

The modified glucan derivative may constitute a resin composition. The glucan derivative may be used for such a resin composition singly or in combination. In addition, the resin composition may comprise other resins as a resin component, for example, an olefinic resin, an acrylic resin, a styrenic resin, a polycarbonate-series resin, a polyester-series resin, a polyacetal-series resin, a polyamide-series resin, a polyphenylene ether-series resin, a polyphenylene sulfide-series resin, a thermoplastic elastomer, a glucan derivative which is not included in the above-mentioned category of the glucan derivative (e.g., a cellulose acylate such as cellulose acetate), or the like. The other resins may be used singly or in combination.

The resin composition may contain conventional additive, for example, a bulking agent (a filler) or a reinforcing agent, a coloring agent (a pigment or a dye), a conducting agent, a flame retardant, a plasticizer, a lubricant, a stabilizer (such as an antioxidant, an ultraviolet absorber, or a heat stabilizer), a releasing agent, and an antistatic agent. These additives may be used singly or in combination.

The modified glucan derivative (and a composition thereof) has, as described above, an excellent moldability, solubility in a solvent, or the like and can be suitably used as a thermoplastic resin, and is favorably molded to produce various molded products (e.g., a one-dimensional molded product such as a fiber, a two-dimensional molded product such as a film, a sheet, or a coating film (or thin film), and a three-dimensional molded product).

The molding process for the modified glucan derivative includes known molding processes, for example, an extrusion molding, an injection molding, an injection compression molding, a transfer molding, a blow molding, a coating process (a film formation using the modified glucan derivative in a melting state (in a solution) such as a spin coating, a roll coating, a curtain coating, a dip coating, or a casting), a spinning (such as a melt spinning, a dry spinning, or a wet spinning), and the like.

### INDUSTRIAL APPLICABILITY

The process of the present invention ensures the graft-polymerization of the cyclic ester to the glucan derivative (e.g., a cellulose acylate such as cellulose acetate) with suppressing the homopolymerization (oligomerization) of the cyclic ester as much as possible, being free from the influence by water present in the reaction system. Therefore, the present invention can effectively produce a modified glucan derivative having a low acid value at a high graft efficiency, in which the cyclic ester is grafted to a glucan derivative.

The modified glucan derivative obtained by the process of the present invention (e. g. , a cellulose acylate derivative) (or a molded product comprising the modified glucan derivative) and various molded products thereof (or a molded product thereof, e.g., an injection molded product thereof) are suitably used for a part or housing for many applications [e.g., an office automation (OA) or electrical household appliances and electrical equipment, an electric or electronic field, a telecommunication equipment, a sanitary field, a transport vehicle (such as an automobile), a habitation or living accommodation (such as a furniture or a building material), and a general merchandise].

### EXAMPLES

Hereinafter, the following examples are intended to describe this invention in further detail and should by no means be interpreted as defining the scope of the invention. Incidentally, in Examples, unless otherwise indicated, the term "part" means "part by weight".

Moreover, in Examples, GPC (gel-permeation chromatography) analysis and the measurement of acid value were conducted under the following conditions.

### (GPC analysis)

Developer: chloroform
Flow rate: 1 ml/min
Column temperature: 40°C
Column arrangement: four columns (in total four
columns, one "Shodex K-6", one "Shodex K-801", and two "Shodex K-802"s manufactured by Showa Denko K.K.) connected in series
Apparatus
   (1) Pump: "LC-10AD" manufactured by Shimadzu Corporation
   (2) Degasser: "ERC-3612" manufactured by PerkinElmer Inc.
   (3) RI detector: "RI-930" manufactured by Jasco Corporation
   (4) UV detector: "UV-970" manufactured by Jasco Corporation
   (5) Oven: "CTA-10A" manufactured by Shimadzu Corporation

### (Measurement of acid value)

In accordance with JIS K0070, the acid value was measured.
Measuring method: neutralization titration
Solvent: chloroform
Indicator: phenolphthalein solution

### (Mechanical property)

Furthermore, the product (grafted product) obtained in Comparative Example 1 was fed into a hot-press machine and subjected to molding under the condition of the press temperature of 220°C, the press pressure of 200 kgf/cm², and the cooling temperature of 3 minutes to produce a press piece (test piece) having a thickness of 0. 8 mm. The tensile modulus and the elongation of the test piece were measured in accordance with JIS K7113. Incidentally, the tensile modulus and the elongations of the product (grafted product) before purification (removing an unreacted cyclic ester) and after purification were measured.

### (Example 1)

To a reactor equipped with a stirrer and an anchor shaped mixing blade, 50 parts of cellulose acetate ("L-20" manufactured by Daicel Chemical Industries, Ltd. and having an average degree of substitution of 2.41, a molecular weight per glucose unit of 263.2, a specific gravity of 1.33, and an average degree of polymerization of 140) were added and subj ected to a drying under a reduced pressure [4 Torr (= about 530 Pa)] at 110°C for four hours. Then the reactor was purged with a dried nitrogen and equipped with a reflux condenser. To the reactor, 50 parts of an ε-caprolactone which had been dried and distilled and 67 parts of toluene (Tol) were added, and the mixture was heated to 130°C and stirred to dissolve the cellulose acetate homogenously. The moisture of the dissolved reaction solution measured by Karl Fischer moisture meter was 0.02% by weight. To the reaction solution, 0.25 part of monobutyltin trioctylate was added, and the reaction solution was heated at 130°C with stirring for three hours. Thereafter, the reaction solution was allowed to cool down to a room temperature to terminate the reaction, and a reaction product was obtained. The conversion of the caprolactone in the obtained reaction product was 99.4% (based on the conversion, the average number of moles (MS') of the total of the graft-polymerized caprolactone and the homopolymerized caprolactone relative to 1 mol of glucose unit was 2.30 mol). The reaction product was subjected to a drying under a reduced pressure at 60°C to remove the solvent. The acid value of the reaction product after removing the solvent was 1. 15 mgKOH/g. Furthermore, 10 parts of the product was dissolved in 90 parts of chloroform, and the solution was slowly dropped into an excessive amount of methanol (900 parts) to precipitate the grafted product. The precipitate was filtrated to remove the homopolymerized caprolactone existing in a small amount. The precipitate was further dried by heating at 60°C for not less than five hours, and the primary structure of the obtained grafted product was determined by ¹H-NMR. As a result, the average number of moles (MS) of the caprolactone grafted to the glucose unit relative to 1 mol of the glucose unit was 2.28 mol.

### (Example 2)

To a reactor equipped with a stirrer and an anchor shaped mixing blade, 50 parts of cellulose acetate ("L-20" manufactured by Daicel Chemical Industries, Ltd. and having an average degree of substitution of 2.41, a molecular weight per glucose unit of 263.2, a specific gravity of 1.33, and an average degree of polymerization of 140) were added and subjected to drying under a reduced pressure (4 Torr) at 110°C for four hours. Then the reactor was purged with a dried nitrogen and equipped with a reflux condenser. To the reactor, 50 parts of an ε-caprolactone which had been dried and distilled and 67 parts of xylene (Xyl) were added, and the mixture was heated to 150°C and stirred to dissolve the cellulose acetate homogenously. The moisture of the dissolved reaction solution measured by Karl Fischer moisture meter was 0.02% by weight. To the reaction solution, 0.25 part of monobutyltin trioctylate was added, and the reaction solution was heated at 150°C with stirring for two hours. Thereafter, the reaction solution was allowed to cool down to a room temperature to terminate the reaction, and a reaction product was obtained. The conversion of the caprolactone in the obtained reaction product was 98.9% (based on the conversion, the average number of moles (MS') of the graft-polymerized caprolactone and the homopolymerized caprolactone relative to 1 mol of glucose unit was 2.28 mol) . The reaction product was subjected to a drying under a reduced pressure at 60°C to remove the solvent. The acid value of the reaction product after removing the solvent was 1.10 mgKOH/g. Furthermore, 10 parts of the product was dissolved in 90 parts of chloroform, and the solution was slowly dropped into an excessive amount of methanol (900 parts) to precipitate the grafted product. The precipitate was filtrated to remove the homopolymerized caprolactone existing in a small amount. The precipitate was further dried by heating at 60°C for not less than five hours, and the primary structure of the obtained grafted product was determined by ¹H-NMR. As a result, the average number of moles (MS) of the caprolactone grafted to the glucose unit relative to 1 mol of the glucose unit was 2.27 mol.

### (Example 3)

To a reactor equipped with a stirrer and an anchor shaped mixing blade, 50 parts of cellulose acetate ("L-20" manufactured by Daicel Chemical Industries, Ltd. and having an average degree of substitution of 2.41, a molecular weight per glucose unit of 263.2, a specific gravity of 1.33, and an average degree of polymerization of 140) were added and subjected to drying under a reduced pressure (4 Torr) at 110°C for four hours. Then the reactor was purged with a dried nitrogen and equipped with a reflux condenser. To the reactor, 50 parts of an ε-caprolactone which had been dried and distilled and 67 parts of ethylbenzene (EB) were added, and the mixture was heated to 145°C and stirred to dissolve the cellulose acetate homogenously. The moisture of the dissolved reaction solution measured by Karl Fischer moisture meter was 0.02% by weight. To the reaction solution, 0.25 part of monobutyltin trioctylate was added, and the reaction solution was heated at 145°C with stirring for two hours. Thereafter, the reaction solution was allowed to cool down to a room temperature to terminate the reaction, and a reaction product was obtained. The conversion of the caprolactone in the obtained reaction product was 98.5% (based on the conversion, the average number of moles (MS') of the graft-polymerized caprolactone and the homopolymerized caprolactone relative to 1 mol of glucose unit was 2.28 mol). The reaction product was subjected to a drying under a reduced pressure at 60°C to remove the solvent. The acid value of the reaction product after removing the solvent was 0.98 mgKOH/g. Furthermore, 10 parts of the product was dissolved in 90 parts of chloroform, and the solution was slowly dropped into an excessive amount of methanol (900 parts) to precipitate the grafted product. The precipitate was filtrated to remove the homopolymerized caprolactone existing in a small amount. The precipitate was further dried by heat ing at 60°C for not less than five hours, and the primary structure of the obtained grafted product was determined by ¹H-NMR. As a result, the average number of moles (MS) of the caprolactone grafted to the glucose unit relative to 1 mol of the glucose unit was 2.27 mol.

### (Comparative Example 1)

To a reactor equipped with a stirrer and an anchor shaped mixing blade, 50 parts of cellulose acetate ("L-20" manufactured by Daicel Chemical Industries, Ltd. and having an average degree of substitution of 2.41, a molecular weight per glucose unit of 263.2, a specific gravity of 1.33, and an average degree of polymerization of 140) were added and subjected to a drying under a reduced pressure (4 Torr) at 110°C for four hours. Then the reactor was purged with a dried nitrogen and equipped with a reflux condenser. To the reactor, 50 parts of an ε-caprolactone which had been dried and distilled and 67 parts of cyclohexanone (ANON) were added, and the mixture was heated to 160°C and stirred to dissolve the cellulose acetate homogenously. The moisture of the dissolved reaction solution measured by Karl Fischer moisture meter was 0.02% by weight. To the reaction solution, 0.25 part of monobutyltin trioctylate was added, and the reaction solution was heated at 160°C with stirring for two hours. Thereafter, the reaction solution was allowed to cool down to a room temperature to terminate the reaction, and a reaction product was obtained. The conversion of the caprolactone in the obtained reaction product was 98.4% (based on the conversion, the average number of moles (MS') of the graft-polymerized caprolactone and the homopolymerized caprolactone relative to 1 mol of glucose unit was 2.27 mol). The reaction product was subjected to a drying under a reduced pressure at 60°C to remove the solvent. The acid value of the reaction product after removing the solvent was 6.10 mgKOH/g. The obtained product (the product before removing the homopolymerized caprolactone) was molded to produce a test piece. The tensile modulus and the elongation of the test piece were 175.2 MPa and 150.5%, respectively. Moreover, in the GPC chart, a shoulder peak due to the oligomer was observed, overlapping with the end of a main peak due to the grafted product. Furthermore, 10 parts of the product was dissolved in 90 parts of chloroform, and the solution was slowly dropped into an excessive amount of methanol (900 parts) to precipitate the grafted product. The precipitate was filtrated to remove the homopolymerized caprolactone. The precipitate was further dried by heating at 60°C for not less than five hours, and the primary structure of the obtained grafted product was determined by ¹H-NMR. As a result, the average number of moles (MS) of the caprolactone grafted to the glucose unit relative to 1 mol of the glucose unit was 1.94 mol. In addition, the obtained product (the product after removing the homopolymer) was molded to produce a test piece. The tensile modulus and the elongation of the test piece were 281.3 MPa and 125.8%, respectively. The removal of a large amount of the homopolymer influenced on the mechanical properties of the product, and the mechanical properties of the product before and after purification (before and after the reprecipitation) were greatly different from each other.

### (Comparative Example 2)

To a reactor equipped with a stirrer and an anchor shaped mixing blade, 50 parts of cellulose acetate ("L-20" manufactured by Daicel Chemical Industries, Ltd. and having an average degree of substitution of 2.41, a molecular weight per glucose unit of 263.2, a specific gravity of 1.33, and an average degree of polymerization of 140) were added and subjected to a drying under a reduced pressure (4 Torr) at 110°C for four hours. Then the reactor was purged with a dried nitrogen and equipped with a reflux condenser. To the reactor, 50 parts of an ε-caprolactone which had been dried and distilled and 67 parts of dimetyl sulfoxide (DMSO) were added, and the mixture was heated to 160°C and stirred to dissolve the cellulose acetate homogenously. The moisture of the dissolved reaction solution measured by Karl Fischer moisture meter was 0.02% by weight. To the reaction solution, 0.25 part of monobutyltin trioctylate was added, and the reaction solution was heated at 160°C with stirring for two hours. Thereafter, the reaction solution was allowed to cool down to a room temperature to terminate the reaction, and a reaction product was obtained. The conversion of the caprolactone in the obtained reaction product was 41.6% (based on the conversion, the average number of moles (MS') of the graft-polymerized caprolactone and the homopolymerized caprolactone relative to 1 mol of glucose unit was 0.961 mol). The reaction product was subj ected to a drying under a reduced pressure at 60°C to remove the solvent. The acid value of the reaction product after removing the solvent was 3.72 mgKOH/g. Furthermore, 10 parts of the product was dissolved in 90 parts of chloroform, and the solution was slowly dropped into an excessive amount of methanol (900 parts) to precipitate the grafted product. The precipitate was filtrated to remove the homopolymerized caprolactone. The precipitate was further dried by heating at 60°C for not less than five hours, and the primary structure of the obtained grafted product was determined by ¹H-NMR. As a result, the average number of moles (MS) of the caprolactone grafted to the glucose unit relative to 1 mol of the glucose unit was 0.781 mol.

### (Comparative Example 3)

To a reactor equipped with a stirrer and an anchor shaped mixing blade, 50 parts of cellulose acetate ("L-20" manufactured by Daicel Chemical Industries, Ltd. and having an average degree of substitution of 2.41, a molecular weight per glucose unit of 263.2, a specific gravity of 1.33, and an average degree of polymerization of 140) were added and subjected to a drying under a reduced pressure (4 Torr) at 110°C for four hours. Then the reactor was purged with a dried nitrogen and equipped with a reflux condenser. To the reactor, 50 parts of an ε-caprolactone which had been dried and distilled and 67 parts of cyclopentanone (CYP) were added, and the mixture was heated to 14 0°C and stirred to dissolve the cellulose acetate homogenously. The moisture of the dissolved reaction solution measured by Karl Fischer moisture meter was 0.02% by weight. To the reaction solution, 0.25 part of monobutyltin trioctylate was added, and the reaction solution was heated at 140°C with stirring for two hours. Thereafter, the reaction solution was allowed to cool down to a room temperature to terminate the reaction, and a reaction product was obtained. The conversion of the caprolactone in the obtained reaction product was 98.5% (based on the conversion, the average number of moles (MS') of the graft-polymerized caprolactone and the homopolymerized caprolactone relative to 1 mol of glucose unit was 2.28 mol). The reaction product was subj ected to a drying under a reduced pressure at 60°C to remove the solvent. The acid value of the reaction product after removing the solvent was 5.23 mgKOH/g. Furthermore, 10 parts of the product was dissolved in 90 parts of chloroform, and the solution was slowly dropped into an excessive amount of methanol (900 parts) to precipitate the grafted product. The precipitate was filtrated to remove the homopolymerized caprolactone. The precipitate was further dried by heating at 60°C for not less than five hours, and the primary structure of the obtained grafted product was determined by ¹H-NMR. As a result, the average number of moles (MS) of the caprolactone grafted to the glucose unit relative to 1 mol of the glucose unit was 1.95 mol.

### (Comparative Example 4)

To a reactor equipped with a stirrer and an anchor shaped mixing blade, 50 parts of cellulose acetate ("L-20" manufactured by Daicel Chemical Industries, Ltd. and having an average degree of substitution of 2.41, a molecular weight per glucose unit of 263.2, a specific gravity of 1.33, and an average degree of polymerization of 140) were added and subjected to a drying under a reduced pressure (4 Torr) at 100°C for four hours. Then the reactor was purged with a dried nitrogen and equipped with a reflux condenser. To the reactor, 50 parts of an ε-caprolactone which had been dried and distilled and 67 parts of methyl ethyl ketone (MEK) were added, and the mixture was heated to 100°C and stirred to dissolve the cellulose acetate homogenously. The moisture of the dissolved reaction solution measured by Karl Fischer moisture meter was 0.02% by weight. To the reaction solution, 0.25 part of monobutyltin trioctylate was added, and the reaction solution was heated at 100°C with stirring for three hours. Thereafter, the reaction solution was allowed to cool down to a room temperature to terminate the reaction, and a reaction product was obtained. The conversion of the caprolactone in the obtained reaction product was 28.1% (based on the conversion, the average number of moles (MS') of the graft-polymerized caprolactone and the homopolymerized caprolactone relative to 1 mol of glucose unit was 0. 650 mol). The reaction product was subjected to a drying under a reduced pressure at 60°C to remove the solvent. The acid value of the reaction product after removing the solvent was 3.58 mgKOH/g. Furthermore, 10 parts of the product was dissolved in 90 parts of chloroform, and the solution was slowly dropped into an excessive amount of methanol (900 parts) to precipitate the grafted product. The precipitate was filtrated to remove the homopolymerized caprolactone. The precipitate was further dried by heating at 60°C for not less than five hours, and the primary structure of the obtained grafted product was determined by ¹H-NMR. As a result, the average number of moles (MS) of the caprolactone grafted to the glucose unit relative to 1 mol of the glucose unit was 0.557 mol.

### (Comparative Example 5)

To a reactor equipped with a stirrer and an anchor shaped mixing blade, 50 parts of cellulose acetate ("L-20" manufactured by Daicel Chemical Industries, Ltd. and having an average degree of substitution of 2.41, a molecular weight per glucose unit of 263.2, a specific gravity of 1.33, and an average degree of polymerization of 140) were added and subjected to a drying under a reduced pressure (4 Torr) at 110°C for four hours. Then the reactor was purged with a dried nitrogen and equipped with a reflux condenser. To the reactor, 50 parts of an ε-caprolactone which had been dried and distilled and 67 parts of xylene (Xyl) were added, and the mixture was heated to 140°C and stirred to dissolve the cellulose acetate homogenously. Themoisture of the dissolved reaction solution measured by Karl Fischer moisture meter was 0.02% by weight. To the reaction solution, 0.25 part of titanium tetraisopropoxide was added, and the reaction solution was heated at 140°C with stirring. About thirty minutes after the reaction started the viscosity of the reaction system increased so high that it was impossible to continue the stirring. Then the reaction solution was allowed to cool down to a room temperature to terminate the reaction, and a reaction product was obtained. The conversion of the caprolactone in the obtained reaction product was 99.4%. However, most of the caprolactone were not grafted, and only the homopolymer of the caprolactone was obtained. The homopolymer was analyzed by ¹H-NMR, and the degree of polymerization of the homopolymer was 129.3. The reason for producing a large amount of the homopolymer is considered that the catalyst used was a titanate catalyst which can initiate the polymerization of the caprolactone. In addition, the high degree of polymerization of the produced homopolymer seems to cause the increase of the viscosity of the reaction system.

### (Comparative Example 6)

To a reactor equipped with a stirrer and an anchor shaped mixing blade, 60 parts of cellulose acetate ("L-20" manufactured by Daicel Chemical Industries, Ltd. and having an average degree of substitution of 2.41, a molecular weight per glucose unit of 263.2, a specific gravity of 1.33, and an average degree of polymerization of 140) was added. Then without predrying (drying under a reduced pressure) the reactor was purged with a dried nitrogen and equipped with a reflux condenser. To the reactor, 40 parts of an ε-caprolactone which had been dried and distilled and 67 parts of xylene (Xyl) were added and the mixture was heated to 140°C and stirred to dissolve the cellulose acetate homogenously. The moisture of the dissolved reaction solution measured by Karl Fischer moisture meter was 1.2% by weight. To the reaction solution, 0.08 part of titanium tetraisopropoxide was added, and the reaction solution was heated at 140°C with stirring for four and a half hours. Thereafter, the reaction solution was allowed to cool down to a room temperature to terminate the reaction, and a reaction product was obtained. The conversion of the caprolactone in the obtained reaction product was 16.6% (based on the conversion, the average number of moles (MS') of the graft-polymerized caprolactone and the homopolymerized caprolactone relative to 1 mol of glucose unit was 0.258 mol). Ten parts of the product was dissolved in 90 parts of chloroform, and the solution was slowly dropped into an excessive amount of methanol (900 parts) to precipitate the grafted product. The precipitate was filtrated to remove the homopolymerized caprolactone. The precipitate was further dried by heating at 60°C for not less than five hours, and the primary structure of the obtained grafted product was determined by ¹H-NMR. As a result, the average number of moles (MS) of the caprolactone grafted to the glucose unit relative to 1 mol of the glucose unit was 0.096 mol.

The results are shown in Table 1. Incidentally, in Table 1, "CA" and "CL" mean cellulose acetate and ε-caprolactone, respectively.

[Table 1]

**Table 1**

| | Examples | | | Comparative Examples | | | | | |
|---|---|---|---|---|---|---|---|---|---|
| | 1 | 2 | 3 | 1 | 2 | 3 | 4 | 5 | 6 |
| Kinds of solvent | Tol | Xyl | EB | ANON | DMSO | CYP | MEK | Xyl | Xyl |
| Solubility in water at 20°C (weight %) | 0.045 | 0.02 | 0.015 | 15 | ∞ | 30 | 21 | 0.02 | 0.02 |
| Boiling point (°C) | 111 | 139 | 136 | 155 | 189 | 131 | 80 | 139 | 139 |
| Moisture of raw material (weight %) | 0.02 | 0.02 | 0.02 | 0.02 | 0.02 | 0.02 | 0.02 | 0.02 | 0.02 |
| CL/CA (weight ratio) | 50/50 | 50/50 | 50/50 | 50/50 | 50/50 | 50/50 | 50/50 | 50/50 | 50/50 |
| Proportion of solvent relative to 100 weight parts of CA (weight part) | 134 | 134 | 134 | 134 | 134 | 134 | 134 | 134 | 112 |
| Proportion of solvent relative to 100 weight parts of CL (weight part) | 134 | 134 | 134 | 134 | 134 | 134 | 134 | 134 | 168 |
| Proportion of solvent relative to 100 weight parts of CA + CL (weight part) | 67 | 67 | 67 | 67 | 67 | 67 | 67 | 67 | 67 |
| Reaction temperature (°C) | 130 | 150 | 145 | 160 | 160 | 140 | 100 | 140 | 140 |
| MS' | 2.30 | 2.28 | 2.28 | 2.27 | 0.961 | 2.28 | 0.650 | 2.28 | 0.258 |
| MS | 2.28 | 2.27 | 2.27 | 1.94 | 0.781 | 1.95 | 0.557 | 0 | 0.096 |
| Conversion (%) | 99.4 | 98.9 | 98.5 | 98.4 | 41.6 | 99.1 | 28.1 | 99.4 | 16.6 |
| Graft efficiency (%) | 98.7 | 99.6 | 99.7 | 85.3 | 81.3 | 85.7 | 85.8 | 0 | 37.2 |
| Acid value (mgKOH/g) | 1.15 | 1.10 | 0.98 | 6.10 | 3.72 | 5.23 | 3.58 | - | - |

## Claims

1. A process for producing a glucan derivative modified with a cyclic ester, which comprises allowing a glucan derivative having a hydroxyl group to react with a cyclic ester in a solvent in the presence of a ring-opening polymerization catalyst to graft-polymerize the cyclic ester to the glucan derivative, wherein
(1) the ring-opening polymerization catalyst is a metal complex which by itself does not initiate the polymerization of the cyclic ester;
(2) the solvent comprises an aromatic hydrocarbon solvent which has a solubility in water of not more than 10% by weight at 20°C; and
(3) the proportion of the solvent is not less than 60 parts by weight relative to 100 parts by weight of the glucan derivative having a hydroxyl group.

2. A process according to claim 1, wherein the glucan derivative having a hydroxyl group is a cellulose C₂₋₄acylate having an average degree of substitution of 1.5 to 2.95.

3. A process according to claim 1, wherein the cyclic ester is at least one member selected from the group consisting of a C₄₋₁₀lactone and a cyclic C₄₋₁₀diester.

4. A process according to claim 1, wherein the ring-opening polymerization catalyst is a metal complex having an anionic ligand corresponding to at least one member selected from the group consisting of a halogen atom, oxygen atom, a hydrocarbon, a β-diketone, and a carboxylic acid.

5. A process according to claim 4, wherein the ring-opening polymerization catalyst at least comprises a tin complex having an anionic ligand corresponding to an aliphatic carboxylic acid.

6. A process according to claim 1, wherein the solvent comprises at least one member selected from the group consisting of a C₆₋₁₂arene and a haloC₆₋₁₂arene.

7. A process according to claim 1, wherein the proportion of the solvent is 60 to 300 parts by weight relative to 100 parts by weight of the glucan derivative having a hydroxyl group, and the proportion of the solvent is 80 to 350 parts by weight relative to 100 parts by weight of the cyclic ester.

8. A process according to claim 1, wherein the proportion of the solvent is 40 to 95 parts by weight relative to 100 parts by weight of the total amount of the glucan derivative having a hydroxyl group and the cyclic ester.

9. A process according to claim 1, wherein the reaction is conducted under the condition of a water content of not more than 0.3% by weight relative to the total amount of the glucan derivative having a hydroxyl group, the cyclic ester, and the solvent.

10. A process according to claim 1, wherein the reaction is conducted under the following conditions:
(i) the glucan derivative having a hydroxyl group is a cellulose C₂₋₄acylate having an average degree of substitution of 1.9 to 2.6;
(ii) the ring-opening polymerization catalyst comprises at least one organotin complex selected from the group consisting of a tin C₆₋₁₀alkanecarboxylate and a mono-or diC₃₋₈alkyltinC₆₋₁₀alkanecarboxylate;
(iii) the solvent comprises a C₆₋₁₀arene;
(iv) the proportion of the solvent is 65 to 250 parts by weight relative to 100 parts by weight of the glucan derivative having a hydroxyl group and the proportion of the solvent is 90 to 280 parts by weight relative to 100 parts by weight of the cyclic ester; and
(v) the water content of the total amount of the glucan derivative having a hydroxyl group, the cyclic ester, and the solvent is not more than 0.15% by weight.

11. A process according to claim 1, wherein the glucan derivative modified with the cyclic ester is obtainable at a graft efficiency of not less than 90%, and the graft efficiency is represented by the formula [A1/(A1+A2)] x 100(%), assuming the amount of the cyclic ester graft-polymerized to the glucan derivative is A1 (mol) and the amount of the homopolymerized cyclic ester is A2 (mol).

12. A process for suppressing a homopolymerization of a cyclic ester in a process for producing a glucan derivative modified with a cyclic ester which comprises graft-polymerizing a cyclic ester to a glucan derivative having a hydroxyl group in a solvent in the presence of a ring-opening polymerization catalyst, wherein the graft-polymerization is conducted under the following conditions:
(1) the ring-opening polymerization catalyst is a metal complex which by itself does not initiate the polymerization of the cyclic ester;
(2) the solvent comprises an aromatic hydrocarbon solvent having a solubility in water of not more than 10% by weight at 20°C; and
(3) the proportion of the solvent is not less than 60 parts by weight relative to 100 parts by weight of the glucan derivative having a hydroxyl group.

13. A glucan derivative modified with a cyclic ester, which is obtainable by a process recited in claim 1.

14. A molded product, which comprises a glucan derivative modified with a cyclic ester recited in claim 13.
